# EUROPEAN PATENT SPECIFICATION

(11) **EP 1 340 418 B1**
(45) Date of publication and mention of the grant of the patent: **30.04.2008**
(21) Application number: 03075616.7
(22) Date of filing: 28.02.2003
(51) Int. Cl.: A01B 45/02, A01B 33/16

(54) **Soil treatment device and cultivator shaft**
Bodenbearbeitungsvorrichtung und Kultivatorachse
Dispositif pour traiter le sol et arbre pour cultivateur

(30) Priority: 28.02.2002 NL 1020080
(43) Date of publication of application: 03.09.2003
(73) Proprietor: Van Loen Techniek B.V., 3824 MJ Amersfoort (NL)
(72) Inventor: van Loen, Leonardus Lambertus, 3828 PV Hoogland (NL)
(74) Representative: Jilderda, Anne Ayolt

(56) References cited:
- EP-A- 0 287 897
- DE-A- 2 355 152
- GB-A- 719 265
- US-A- 4 892 154
- US-A- 5 209 306
- US-A- 5 690 179

## Description

The invention relates to a soil treatment device comprising a frame which may or may not be driven, which is displaceable substantially parallel to a soil surface to be treated, and in which a cultivator shaft is accommodated with rotation possibility, a number of cultivator members projecting radially from said cultivator shaft so as to enter the soil top layer during operation (see eg. US-A-4 892 154).

Such a device is generally used for cultivating the soil of a surface covered with grass. The device is displaced over the turf or lawn, usually by means of wheels, and the cultivator shaft is driven at the same time so that the cultivator members projecting therefrom enter the soil. The cultivator members thus pierce or cut superficial channels into the grass-covered soil so as to aerate the latter, which benefits the growth and quality of the grass covering, the lawn, etc.

The cultivator shaft of a prior art device of the kind mentioned in the opening paragraph comprises a rigid shaft which is journaled between the wheels of the frame and which may or may not be driven independently, i.e. independently of the wheels. A large number of cultivator knives extend in radial directions and are distributed evenly both over the length and over the circumference of the shaft. The length of the cultivator knives causes them to extend beyond the outer circumference of the wheels with which the frame rests on the soil, so that the knives will enter the subjacent soil in a large number of locations upon a rotation of the shaft.

An excellent result can be obtained thereby on a fully flat surface, the soil then being evenly provided with a plurality of channels for admitting air to the roots of the plants. In practice, however, a fully flat surface is found to be an exception rather than the rule. If a terrain is more or less uneven, and especially if there are slight depressions and bumps having dimensions of the order of the length of the cultivator shaft, the latter will hit against the higher portions and the cultivator members will not reach the lower portions, or will reach them to a lesser degree. The cultivation result will then be less good or even insufficient in these lower portions.

The invention has for its object inter alia to provide a device of the kind mentioned in the opening paragraph which offers a satisfactory cultivation result also on an uneven terrain.

To achieve the above object, according to the invention as claimed, a device of the kind mentioned in the opening paragraph is characterized in that the cultivator shaft comprises a plurality of individual shaft parts that can each rotate about an individual axis of rotation and are capable of and designed for enclosing respective angles with one another. The basic principle is thus not that of a rigid cultivator shaft but of an articulated shaft comprising a number of parts that are mounted so as to be movable with respect to one another. These parts are accordingly capable of following the contour of the soil, so that in the case of a non-flat surface there will still be a satisfactory incursion of the cultivator members over the full length of the cultivator shaft. The invention is based on the recognition that the critical dimension of inequalities in the terrain is thus limited to the length of a shaft part.

The device according to the invention as claimed is characterized in that the cultivator shaft comprises an articulated shaft of a number of shaft parts that are coupled with the possibility of mutual movement. The articulation and the mutual coupling of the shaft parts enable the latter to transmit the rotation of the cultivator shaft to one another while still retaining the possibility of enclosing an angle with one another so as to follow the contour of the terrain. As a result, the cultivator shaft need be driven in one location only. In a special embodiment, the device according to the invention is characterized in that the shaft parts are interconnected by means of hinges, more in particular by means of universal joints.

To promote a homogeneous and controlled penetration depth in the soil in spite of the freedom of movement of the individual shaft parts, a further preferred embodiment of the device according to the invention is characterized in that each shaft part bears on the soil surface by means of two support members, one on either side. The support members here provide a reference with respect to the soil surface such that their correct dimensioning or adjustment on the individual shaft parts will cause the cultivator members to be driven into the soil to substantially the same depth. In a special embodiment, the device according to the invention is characterized in that the support member comprises a wheel or a slider in order to hamper the progress of the device over the terrain as little as possible.

In a further preferred embodiment, the device according to the invention is characterized in that a drive shaft engages the cultivator shaft via a coupling, and in that said coupling is located adjacent an end of the cultivator shaft. The cultivator shaft is thus given a forced drive, i.e. independent of the wheels of the device. This renders it possible to attune the speed of rotation of the cultivator shaft accurately to the characteristics of the terrain, independently of the speed of movement of the device. The fact that the coupling is located at an end of the cultivator shaft keeps this coupling substantially out of sight of a driver of a tractor or some such pulling vehicle, so that he has a full view of the cultivation process.

The invention also relates to a cultivator shaft as used in the device according to the invention described above and will now be described in more detail with reference to an embodiment and an accompanying drawing, in which:
Fig. 1 shows an embodiment of a soil treatment device according to the present invention in perspective view;
Fig. 2 shows the cultivator shaft used in the device of Fig. 1 in cross-section; and
Fig. 3 shows the coupling between shaft parts of the cultivator shaft of Fig. 2 in detail.

The Figures are diagrammatic and not all drawn to the same scale. Some dimensions may have been particularly exaggerated for the sake of clarity. Corresponding components have been given the same reference numerals as much as possible in the Figures.

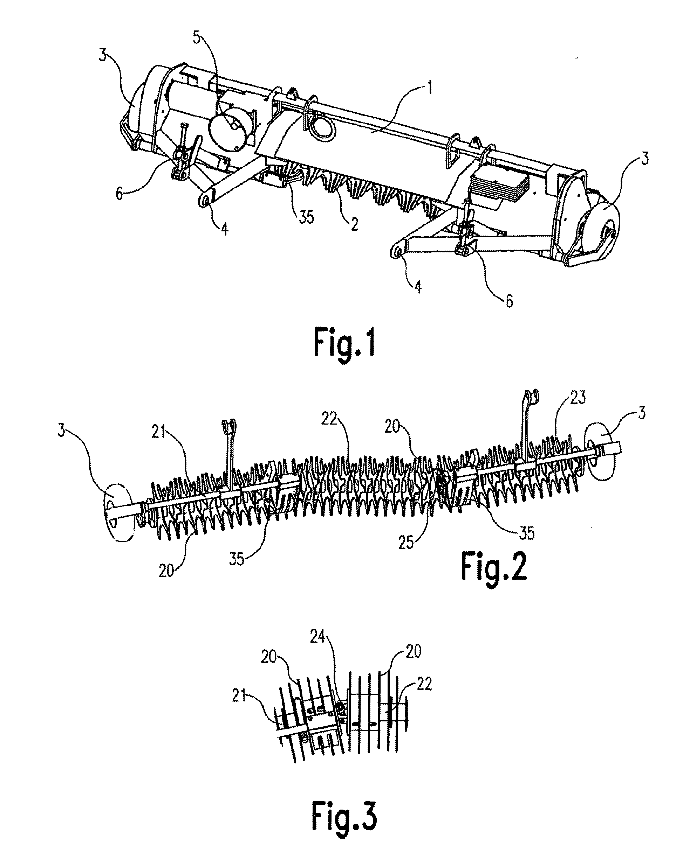

Fig. 1 shows an embodiment of a soil treatment device according to the invention. This is a vehicle-drawn version. It is noted that alternatively the device may be constructed so as to be self-propelling, in which case it may accommodate a driver. The device comprises a steel frame 1 in which a cultivator shaft 2 is held with rotation possibility. The cultivator shaft 2 is suspended in the frame 1 by means of bearings for the reduction of frictional resistance and wear. The frame rests on a base surface with tires 3 on either side so as to protect the soil. The frame comprises a towing attachment 4 at the front that can be coupled to a standard lifting device of a tractor. A secondary output shaft of the tractor is then coupled to an end of the cultivator shaft 2 via a coupling 5 designed for this purpose and thus drives the cultivator shaft. The speed of rotation of the cultivator shaft 2 can be set as desired by means of a speed control on the tractor output shaft. A transmission may additionally be provided between the coupling 5 and the cultivator shaft 2 for giving the cultivator shaft a speed different from that of the tractor output shaft. The placement of the coupling 5 at the end of the device achieves that it does not substantially hamper the tractor driver's view of the cultivation process.

The cultivator shaft is provided with cultivator members 20 evenly distributed over substantially its entire length, which members project in radial directions from the shaft and are also evenly distributed over a circumference thereof. Said cultivator members or knives 20 are designed for entering a soil to be treated and thus to break open passages therein through which air is given better access to the root systems of plants growing on the soil surface, in particular grass. The quality of, for example, a turf or lawn can be considerably improved thereby. As the cultivator shaft revolves, a number of cultivator knives are thus driven into the soil next to one another and after one another. The knives 20 for this purpose project beyond an outer circumference of the wheels 3 with which the device bears on the soil surface. The degree of projection determines the penetration depth and can be adjusted as desired by means of a depth control 6 provided for this purpose.

The cultivator shaft used is depicted separately in Fig. 2 in cross-section and comprises, according to the invention, a number of separate shaft parts 21, 22, 23 which are interconnected with mutual movement possibility and which are thus capable of rotating each about its own axis of rotation. This movability enables the cultivator shaft to follow unevennesses in the terrain, so that an adequate penetration of the soil by the cultivator members is safeguarded over the entire length of the cultivator shaft 2. The cultivator shaft in this example comprises an articulated shaft of mutually coupled shaft parts 21, 22, 23 which are interconnected by universal joints 25. Such a joint is depicted in more detail in Fig. 3, showing a mutual pivoting action of the shaft parts 21, 22, 23 while a rotation is transmitted form one shaft part to the next.

To promote a constant penetration depth, the individual shaft parts are each supported on either side on the soil surface by means of a support member. In the present example, the two wheels 3 at the ends of the device form such support members, while in-between two sliders 35 are mounted for supporting the shaft parts 21, 22, 23. The support members 3, 35 thus maintain a fixed distance between the shaft parts and the soil under treatment, so that the cultivator members 20 will enter the soil to at least substantially the same depth. A particularly good cultivation result may thus be obtained, both on a fully flat surface and on an uneven terrain.

Although the invention was described in detail above with reference to only a single embodiment, it will be clear to those skilled in the art that the invention is by no means limited thereto. Thus, instead of an articulated shaft, a cultivator shaft may be used comprising loose shaft parts that are independently suspended and driven. It is alternatively possible to use, instead of a universal joint, some other coupling between the shaft parts that transmits the rotation while maintaining mutual movability. The above example was based on a vehicle-drawn device, but the device may alternatively be constructed so as to be pushed or self-driven. Depending on the desired degree of compliance of the cultivator shaft with the terrain, more shaft parts may be accommodated in the cultivator shaft. The total length of the cultivator shaft may then still be adjusted to fit the extent of the terrain to be processed at all times.

## Claims

1. A soil treatment device comprising a frame (1) which may or may not be driven, which is displaceable substantially parallel to a soil surface to be treated, and in which a cultivator shaft (2) is accommodated with rotation possibility, a number of cultivator members projecting radially from said cultivator shaft (2) so as to enter the soil top layer during operation, **characterized in that** the cultivator shaft (2) comprises a plurality of individual shaft parts (21,22,23) that can each rotate about an individual axis of rotation and are capable of and designed for enclosing respective angles with one another such that said plurality of shaft parts (21,22,23) adjusts to unevenness in the soil the cultivator shaft (2) comprising an articulated shaft consisting of the plurality of shaft parts (21,22,23) that are coupled with the possibility of mutual movement and **in that** the cultivator shaft (2) is driven in one location only.

2. A device as claimed in claim 1, **characterized in that** the shaft parts (21,22,23) are interconnected by means of hinging joints (25).

3. A device as claimed in claim 1 or 2, **characterized in that** the shaft parts (21,22,23) are interconnected by means of universal joints (25).

4. A device as claimed in any one of the preceding claims, **characterized in that** each shaft part (21,22,23) bears on the soil surface by means of two support members (3,35), one on either side.

5. A device as claimed in claim 4, **characterized in that** the support member (3,35) comprises a wheel or a slider.

6. A device as claimed in any one of the preceding claims, **characterized in that** a drive shaft engages the cultivator shaft via a coupling (5), and **in that** said coupling (5) is located adjacent an end of the cultivator shaft (2).

7. A cultivator shaft (2) as used in the device claimed in any one or several of the preceding claims.

## Patentansprüche

1. Bodenbehandlungsvorrichtung mit einem Rahmen (1), der angetrieben oder nicht angetrieben sein kann, der im Wesentlichen parallel zu einer zu behandelnden Bodenoberfläche verlagerbar ist, und in welchem eine Kultivator-Welle (2) mit einer Rotationsmöglichkeit aufgenommen ist, wobei eine Vielzahl von Kultivator-Teilen radial von der Kultivator-Welle (2) hervorspringen, um in die obere Schicht des Bodens während des Betriebs eindringen zu können, **dadurch gekennzeichnet, dass** die Kultivator-Welle (2) eine Vielzahl von einzelnen Wellen-Teilen (21, 22, 23) aufweist, die sich jeweils um eine individuelle Rotationsachse drehen können und die in der Lage sind und dazu ausgelegt sind, jeweilige Winkel zueinander einzuschließen, derart, dass sich die Vielzahl von Wellen-Teilen (21, 22, 23) auf Unebenheiten im Boden einstellt, wobei die Kultivator-Welle (2) eine gelenkige Welle aufweist, die die Vielzahl von Wellen-Teilen (21, 22, 23) umfasst, die mit der Möglichkeit einer gegenseitigen Bewegung verbunden sind und wobei die Kultivator-Welle (2) nur an einer Stelle angetrieben ist.

2. Vorrichtung nach Anspruch 1, **dadurch gekennzeichnet, dass** die Wellen-Teile (21, 22, 23) über Scharnierverbindungen (25) miteinander verbunden sind.

3. Vorrichtung nach Anspruch 1 oder 2, **dadurch gekennzeichnet, dass** die Wellen-Teile (21, 22, 23) über universelle Verbindungen (25) miteinander verbunden sind.

4. Vorrichtung nach einem der vorhergehenden Ansprüche, **dadurch gekennzeichnet, dass** jedes Wellen-Teil (21, 22, 23) auf der Bodenoberfläche über zwei Trageelemente (3, 35) getragen wird, und zwar eines pro Seite.

5. Vorrichtung nach Anspruch 4, **dadurch gekennzeichnet, dass** das Trageelement (3, 35) ein Rad oder eine Kufe umfasst.

6. Vorrichtung nach einem der vorhergehenden Ansprüche, **dadurch gekennzeichnet, dass** eine Antriebswelle mit der Kultivator-Welle über eine Kupplung (5) zusammenwirkt, und dass die Kupplung (5) benachbart einem Ende der Kultivator-Welle (2) platziert ist.

7. Kultivator-Welle (2), wie sie in der in einem der mehreren der vorhergehenden Ansprüche beansprucht wird, verwendet wird.

## Revendications

1. Dispositif de traitement pour le sol comprenant un châssis (1) qui peut ou ne pas être entraîné, qui est déplaçable de manière sensiblement parallèle à une surface de sol à traiter, et dans lequel un arbre (2) de cultivateur est logé avec une possibilité de rotation, un certain nombre d'éléments de cultivateur faisant saillie radialement à partir dudit arbre (2) de cultivateur pour pénétrer dans la couche supérieure de sol pendant le fonctionnement, **caractérisé en ce que** ledit arbre (2) de cultivateur comprend une pluralité de parties d'arbre individuelles (21, 22, 23) qui peuvent chacune tourner autour d'un axe de rotation individuel, et sont capables de et conçues pour enfermer des angles respectifs entre elles de sorte que ladite pluralité de parties d'arbre (21, 22, 23) s'ajuste à l'irrégularité du sol, l'arbre (2) de cultivateur comprenant un arbre articulé se composant de la pluralité de parties d'arbre (21, 22, 23) qui sont couplées avec la possibilité de mouvement mutuel, et **en ce que** l'arbre (2) de cultivateur est entraîné dans un emplacement unique.

2. Dispositif selon la revendication 1, **caractérisé en ce que** les parties d'arbre (21, 22, 23) sont interconnectées au moyen de joints d'articulation (25).

3. Dispositif selon la revendication 1 ou 2, **caractérisé en ce que** les parties d'arbre (21, 22, 23) sont interconnectées au moyen de joints universels (25).

4. Dispositif selon l'une quelconque des revendications précédentes, **caractérisé en ce que** chaque partie d'arbre (21, 22, 23) repose sur la surface de sol au moyen de deux éléments de support (3, 35), un de chaque côté.

5. Dispositif selon la revendication 4, **caractérisé en ce que** l'élément de support (3, 35) comprend une roue ou une glissière.

6. Dispositif selon l'une quelconque des revendications précédentes, **caractérisé en ce qu'**un arbre d'entraînement met en prise l'arbre (2) de cultivateur via un couplage (5) et **en ce que** ledit couplage (5) est positionné de manière adjacente à une extrémité de l'arbre (2) de cultivateur.

7. Arbre (2) de cultivateur tel qu'utilisé dans le dispositif selon une ou plusieurs des revendications précédentes.
